# DEMANDE DE BREVET EUROPEEN

(11) **EP 0 567 384 A1**
(43) Date de publication de la demande: **27.10.1993**
(21) Numéro de dépôt: 93401007.5
(22) Date de dépôt: 19.04.1993
(51) Int. Cl.: H04B 10/28

(54) **Système de transmission optique interactif**

(30) Priorité: 21.04.1992 FR 9204848
(71) Demandeur: FRANCE TELECOM, F-75015 Paris (FR)
(72) Inventeur: Auffret, René, F-22700 Perros Guirec (FR); Chawki, Mouhammad, F-22300 Lannion (FR); Berthou, Louis, F-22300 Rospez (FR)
(74) Mandataire: Signore, Robert

(57) **Abrégé**

Le système comprend un ensemble émetteur (EE) avec un laser DFB (10) modulé en fréquence FSK et un ensemble récepteur (ER) comprenant le même type de laser DFB (20) et fonctionnant en photorécepteur. Pour rendre ce système interactif, on munit le récepteur (ER) d'un circuit de sélection de canal (40) apte à délivrer un courant qui va placer le laser (20) de l'ensemble récepteur (ER) largement au-dessus du seuil et le faire fonctionner en émetteur modulé en amplitude. Le faisceau émis par ce laser (20) va remonter la ligne de transmission optique (FO) jusqu'à l'ensemble émetteur (EE). Une démodulation d'amplitude (48) permettra de restituer le code de sélection et de commander le canal d'informations (S) approprié.

Application aux télécommunications optiques.

## Description

### Domaine technique

La présente invention a pour objet un système de transmission optique interactif. Elle trouve une application en télécommunications optiques et notamment dans la transmission de programmes vidéo (télévision haute définition ou normale) et/ou de programmes audio (musique, informations, etc...)

### Etat de la technique antérieure

Les lasers à semiconducteur du type à réaction distribuée, ou DFB en abrégé pour "Distributed Feed- back", présentent l'intérêt de pouvoir constituer à la fois des émetteurs et des récepteurs. Des liaions optiques peuvent donc être réalisées avec le même type de composants, aussi bien à l'émission qu'à la réception.

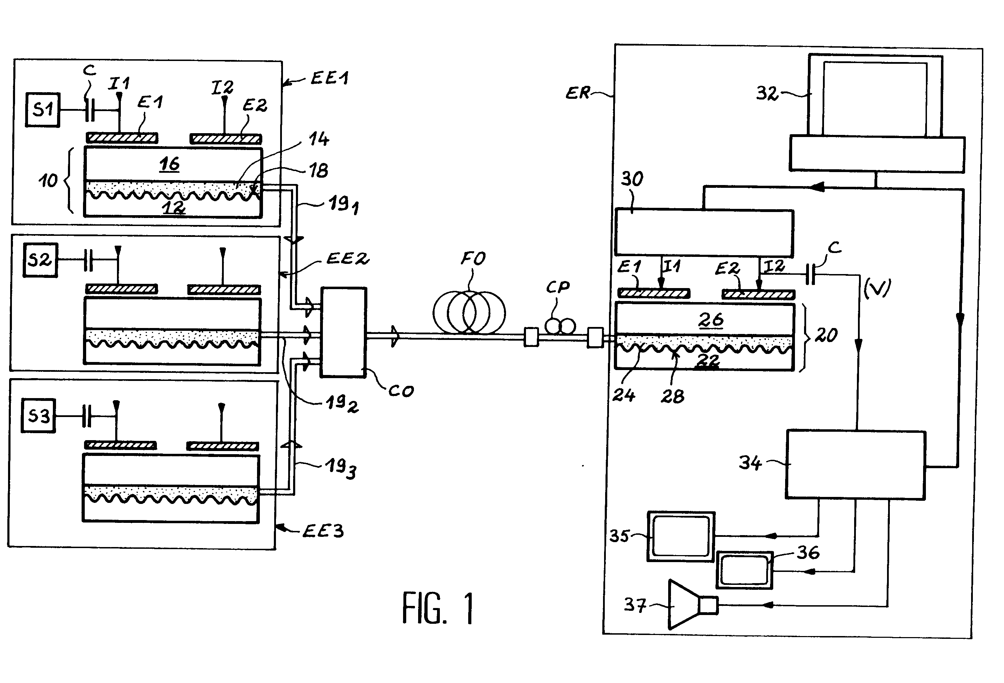

L'article de M.J. CHAWKI et al. intitulé "M3-NET: Demonstration of HD WDM Optical Network using Two-Electrode DFB-LD Filter as Tunable Narrowband FM Receiver" publié dans la revue "Elec- tronics Letters", 16th January 1992, vol. 28, n° 2 décrit ainsi un réseau optique permettant de transmettre plusieurs programmes à l'aide de ces composants. Un tel système est illustré sur la figure 1 annexée.

Tel que représenté, ce système comprend trois ensembles émetteurs EE₁, EE₂, EE₃ et un ensemble récepteur ERentre lesquels on trouve un coupleur optique CO, du type 3 vers 1, recevant les trois faisceaux issus des ensembles émetteurs, une ligne de transmission optique F0, par exemple une fibre optique et un dispositif de contrôle de polarisation CP.

Chaque ensemble émetteur comprend essentiellement un laser à semiconducteur 10, du type à réaction distribuée DFB. Ce laser comprend schématiquement une première couche de confinement 12, une couche active 14, une seconde couche de confinement 16 et un réseau de diffraction 18. Il émet un faisceau optique dont la longueur d'onde dépend des matériaux semiconducteurs utilisés et des courants de polarisation 11 et 12. On peut ainsi avoir trois longueurs d'onde différentes λ₁,λ₂, λ₃ pour les trois sous-ensembles EE₁, EE₂ et EE₃. Les trois faisceaux émis sont référencés 19₁, 19₂, 19a. Ces lasers sont en outre du type multiélectrode, avec une première et une seconde électrodes d'alimentation, respectivement E₁ et E₂. Chaque ensemble émetteur comprend une double source de courant 11, 12 apte à ajuster la longueur d'onde d'émission de chaque émetteur et une source de courant, respectivement S₁, S₂, S₃, apte à délivrer un courant codé numériquement par les informations à transmettre. Cette source est reliée à la première électrode E₁ du laser et module en fréquence celui-ci (modulation dite FSK pour "Frequen- cy Shift Keying").

Quant à l'ensemble récepteur ER, il comprend un second laser 20, identique au premier 10, c'est-à-dire à réaction distribuée (DFB), avec une première couche de confinement 22, une couche active 24, une seconde couche de confinement 26 et un réseau 28. Comme le premier, ce second laser comprend une première et une seconde électrodes, respectivement E₁ et E₂.

L'ensemble récepteur comprend encore un sélecteur de longueur d'onde 30 commandé par un calculateur 32 pour régler, par le biais des courants 11, 12 injectés dans le laser, la longueur d'onde de détection λ₁, λ₂, ou λ₃.

L'électrode E₂ du laser 20 délivre une tension V dont les variations représentent l'information qui avait été utilisée dans le laser émetteur 10 pour moduler en fréquence le faisceau optique émis.

Un sélecteur de terminal 34 permet d'adresser le signal démodulé vers l'un ou l'autre de trois terminaux 35, 36 ou 37, selon la nature de l'information reçue (télévision haute définition ou normale, son, etc.).

Bien que donnant satisfaction à certains égards, ce système, comme tous les systèmes à émetteur et à récepteur, présente l'inconvénient d'être unidirectionnel. La présente invention a justement pour but de remédier à cet inconvénient en prévoyant des moyens aptes à rendre le système interactif, c'est-à-dire à autoriser une commande de l'ensemble émetteur à partir de l'ensemble récepteur.

### Exposé de l'invention

A cette fin, l'invention, qui utilise encore la faculté qu'offrent les lasers DFB de fonctionner aussi bien en émetteur qu'en récepteur prévoit, dans l'ensemble récepteur, des moyens d'alimentation du laser au-dessus du seuil, pour le faire passer le moment voulu en régime émetteur, afin qu'il délivre un faisceau optique qui pourra servir de support à une télécommande de l'ensemble émetteur. Pour pouvoir discriminer l'information de télécommande de l'information principale, l'invention prévoit d'utiliser la modulation d'amplitude pour assurer l'interactivité, tout en gardant la modulation de fréquence pour assurer la transmission des informations vidéo et/ou audio. L'ensemble émetteur devant recevoir le signal de télécommande comprend dès lors un photodétecteur particulier adapté à la modulation d'amplitude. Le signal délivré par ce photodétecteur peut alors commander la source d'informations de l'émetteur, ce qui permet de sélectionner un canal ou un autre.

De façon précise, la présente invention a donc pour objet un système de transmission optique comprenant :
A) au moins un ensemble émetteur comprenant un premier laser à semiconducteur du type à réaction distribuée (DFB), ce laser possédant une première et une seconde électrodes d'alimentation, deux sources de courants aptes à délivrer des courants de polarisation 11 et 12 et une source apte à délivrer un courant Si codé numériquement par des informations, cette source étant reliée à la première électrode et modulant en fréquence (FSK) le faisceau optique émis par le laser,
B) une ligne de transmission optique apte à recevoir ce faisceau optique et à le transmettre,
C) au moins un ensemble récepteur comprenant un second laser, identique au premier, c'est-à-dire à réaction distribuée (DFB), avec une première et une seconde électrodes, ce second laser fonctionnant en récepteur et délivrant sur sa seconde électrode une tension dont les variations représentent l'information utilisée dans la source de l'ensemble émetteur pour moduler en fréquence le faisceau émis, et un terminal restituant ladite information,

ce système étant caractérisé par le fait qu'il comprend en outre des moyens pour télécommander la source de l'ensemble émetteur depuis l'ensemble récepteur, c'est-à-dire pour rendre le système interactif, ces moyens comprenant :
D) dans l'ensemble récepteur :
   - un circuit de polarisation (11, 12) apte à accorder la longueur d'onde du laser filtre de réception sur celle de l'émetteur,
   - un circuit de sélection de canal relié à la première électrode du second laser et apte à alimenter celui-ci en courant au-dessus d'un courant de seuil pour le faire travailler en émetteur en modulation d'amplitude, ce circuit délivrant un courant codé en amplitude, le second laser de l'ensemble récepteur émettant ainsi un faisceau optique modulé en amplitude, ce faisceau optique étant transmis vers l'ensemble émetteur à travers la ligne de transmission optique,
E) dans l'ensemble émetteur :
   - un photorécepteur sensible à la modulation d'amplitude et recevant le faisceau optique modulé en amplitude provenant du second laser, ce photorécepteur délivrant une tension restituant le code ayant servi à la modulation d'amplitude du second laser,
   - un circuit de sélection commandé par la tension de détection et commandant la source, laquelle comprend plusieurs canaux d'informations, le circuit de sélection sélectionnant l'un de ces canaux en fonction du code reçu.

Ainsi, le laser de l'ensemble récepteur fonctionne tantôt en récepteur de signaux modulés en fréquence (pendant la transmission d'un canal d'informations), tantôt en émetteur à modulation d'amplitude, (pour une télécommande de changement de canal).

La présente invention peut s'appliquer à des systèmes à un seul ensemble émetteur mais également à des systèmes à plusieurs ensembles émetteurs et un seul ensemble récepteur, comme le système M³NET (Marque déposée) illustré sur la figure 1. Elle peut s'appliquer encore à des systèmes à plusieurs ensembles récepteurs dans le cas où plusieurs abonnés ont accès à une même source d'informations (laquelle peut contenir un ou plusieurs ensembles d'émission).

Le système de l'invention pourrait rappeler, à certains égards, les systèmes bidirectionnels tels que décrits dans la demande de brevet FR-A-2 662 883 où l'on trouve deux ensembles identiques à laser DFB travaillant "à l'alternat", c'est-à-dire alternativement en émission et en réception. Il faut observer cependant les différences importantes suivantes :
- dans la présente invention, le laser de l'ensemble émetteurfonctionne toujours en émetteur et non alternativement en émetteur et en récepteur ;
- si le laser de l'ensemble récepteur fonctionne bien alternativement en récepteur et en émetteur, ces deux modes de fonctionnement sont très différents puisqu'en récepteur le laser démodule un signal optique modulé en fréquence (FSK) alors qu'en émetteur il fonctionne en modulation d'amplitude (ASK) ;
- l'ensemble émetteur de la présente invention comprend des moyens pour démoduler un signal optique modulé en amplitude, ce qui n'est pas le cas dans un système bidirectionnel ;
- enfin, dans la présente invention, l'ensemble émetteur est commandé par le signal qu'il a reçu et démodulé, ce qui établit justement l'interactivité, alors que, dans le système bidirectionnel antérieur, cette interactivité est absente en raison même de l'alternance, les deux voies de transmission étant indépendantes l'une de l'autre.

### Brève description des dessins

- la figure 1, déjà décrite, montre un système connu de transmission optique utilisant des lasers DFB ;
- la figure 2 montre un système conforme à la présente invention ;
- la figure 3 illustre une variante à plusieurs ensembles émetteurs.

### Exposé détaillé d'un mode de réalisation

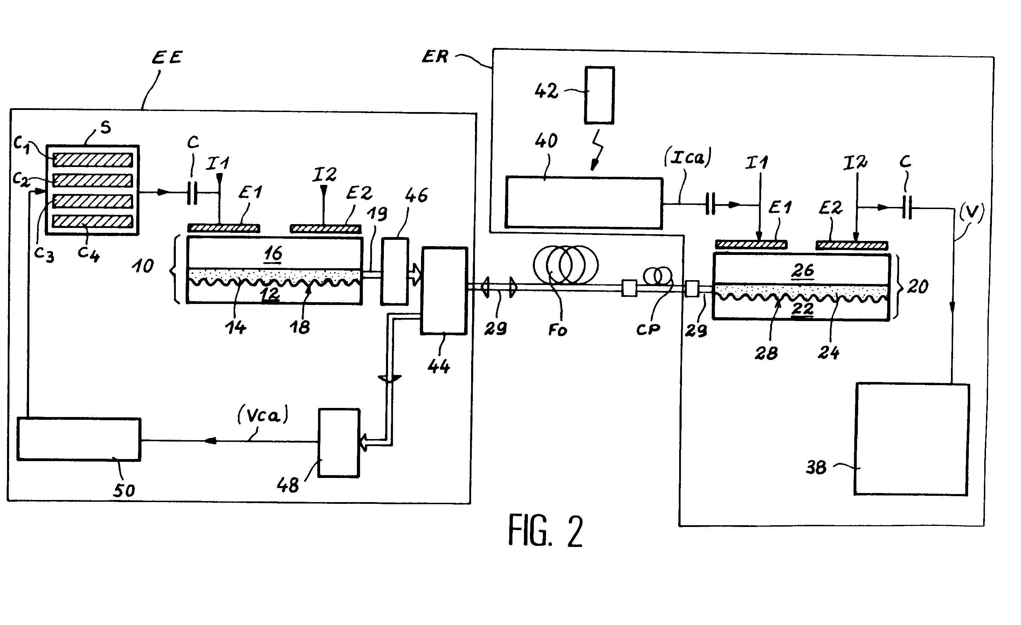

La figure 2 montre un système de transmission optique conforme à l'invention dans une variante à un seul ensemble émetteur. Le système représenté comprend des moyens déjà rencontrés dans la figure 1 et qui portent pour simplifier les mêmes références. Il s'agit de l'ensemble émetteur EE avec son laser DFB 10 (empilement 12, 14, 16 et réseau 18), ses deux électrodes E_{1'} E₂ et ses sources en courants 11, 12 pour la polarisation et le réglage de la longueur d'onde d'émission et la source Si pour la modulation en fréquence du laser. Il s'agit encore de l'ensemble récepteur ER, avec son laser DFB 20 (empilement 22, 24, 26 et réseau 28), ses deux électrodes E₁, E₂ et son terminal 38. Entre ces deux ensembles, on trouve encore une fibre optique FO et un contrôleur de polarisation CP. Ce dernier moyen permet d'optimiser la sensibilité de la détection en ajustant la direction de polarisation de la lumière incidente. Ce composant est utile mais non indispensable.

Le système représenté sur la figure 2 comprend en outre des moyens pour télécommander la source S de l'ensemble émetteur EE depuis l'ensemble récepteur ER, c'est-à-dire pour donner à l'ensemble un caractère interactif. Ces moyens supplémentaires comprennent, tout d'abord, dans l'ensemble récepteur ER, un circuit de sélection de canal 40 comman- dable manuellement ou par l'intermédiaire d'un boîtier de télécommande 42. Ce circuit 40 est relié à la première électrode E₁ du laser 20. Il alimente le laser en courant Ica au-dessus du seuil pour faire travailler le laser en émetteur à modulation d'amplitude. Le laser 20 émet un faisceau optique 29 modulé en amplitude. Ce faisceau optique est transmis vers l'ensemble émetteur EE à travers la ligne de transmission optique F0.

Dans l'ensemble émetteur EE, on trouve, en plus des moyens déjà décrits à propos de la figure 1, un coupleur optique 44 pour recevoir le faisceau optique 29 modulé en amplitude et séparer ce faisceau du faisceau 19 émis par le laser 10 et modulé en fréquence. Il peut s'agir d'une lame semi-transparente ou, fonctionnellement, d'un coupleur directif.

Ce coupleur peut être associé à un isolateur optique 46 pour éviter que le faisceau 29 ne vienne perturber le fonctionnement du laser 10.

On trouve encore, dans l'ensemble émetteur, un photorécepteur 48 sensible à la modulation d'amplitude. Ce photorécepteur reçoit le faisceau optique 29 modulé en amplitude délivré par le coupleur 44 et délivre une tension V_{ca} restituant le code ayant servi à la modulation d'amplitude dans le second laser20. Ce photorécepteur peut être constitué par une diode PIN ou une APD (Avalanche PhotoDiode).

Enfin, l'ensemble émetteur comprend encore un circuit de sélection 50 commandé par la tension de détection V_{ca} et commandant la source S. De préférence, cette source comprend plusieurs canaux d'informations C₁, C₂, C₃, C₄ et le circuit de sélection 50 vient sélectionner l'un de ces canaux en fonction du code reçu.

Dans un tel système, l'ensemble émetteur EE constitue un centre de distribution de programmes, alors que l'ensemble récepteur est disposé chez un abonné. Celui-ci a donc la possibilité, par son boîtier de télécommande, de choisir un canal (télévision, son, etc...). La différence avec une télécommande telle qu'on la connaît dans un système diffusé ou cablé, est que, entre le lieu de la télécommande et la source, il peut y avoir, dans le cas de l'invention, une très longue distance, par exemple des kilomètres et que seul le programme sélectionné est émis.

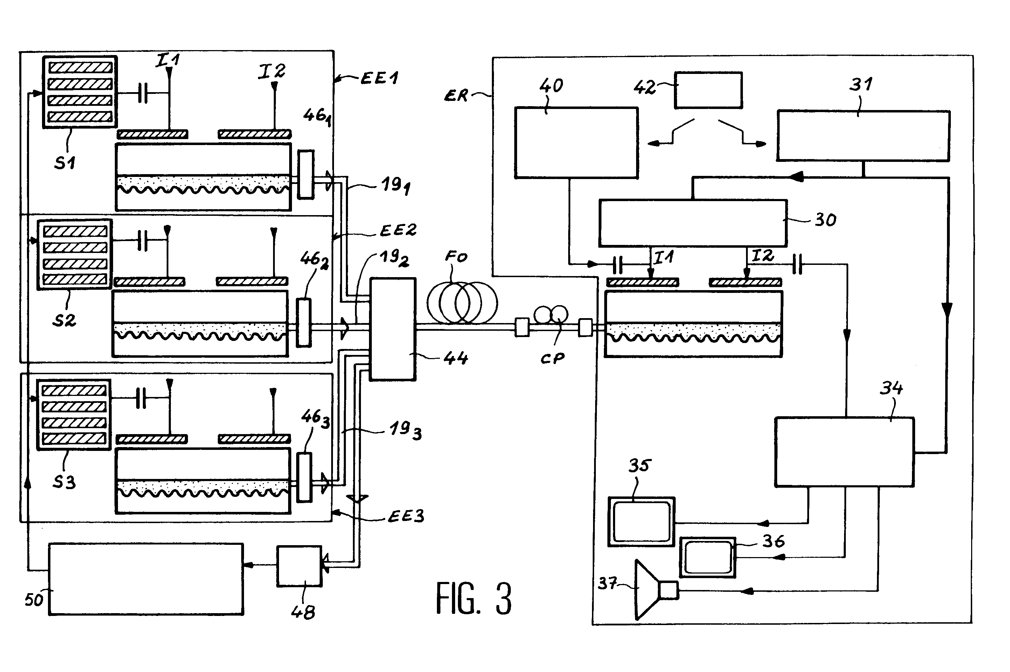

L'invention s'applique à des systèmes plus complexes, par exemple au système M³⁻NET (Marque déposée) illustré sur la figure 1. Le système obtenu est illustré sur la figure 3. Il comprend trois ensembles émetteurs, respectivement EE₁, EE₂, EE₃ affecté à trois services différents, par exemple à la télévision haute définition, à la télévision à définition normale et au son numérique (disque laser). Ces trois ensembles comprennent trois sources 8₁, S₂, S₃ alimentant trois lasers émettant trois faisceaux 19₁, 19₂, 19₃ à trois longueurs d'onde différentes λ₁,λ₂, λ₃. Ces trois ensembles comprennent chacun un isolateur optique, respectivement 46₁, 46₂, 46₃. Un seul coupleur 44 de type 3 vers 1 est utilisé pour rassembler les trois faisceaux 19₁, 19₂, 19₃. Par ailleurs, ce coupleur délivre le faisceau de télécommande provenant du récepteur et le dirige vers un photorécepteur unique 48. Celui-ci commande un sélecteur de canaux 50, qui commande à son tour les sources 8₁, S₂, S₃.

Côté récepteur, on retrouve le sélecteur de service 31, le sélecteur de canaux 40, le sélecteur de terminaux 34 et les trois terminaux 35, 36, 37 respectivement affectés dans l'exemple considéré, à la télévision haute définition, à la télévision normale et au son.

Le système de l'invention peut s'appliquer à plusieurs abonnés. Dans ce cas, un codage approprié des signaux de télécommande émis par les divers abonnés permet d'utiliser un seul détecteur dans l'ensemble émetteur. Pour éviter des collisions, lorsque deux abonnés numérotent au même instant, on envoie, par le signal numérique transmis de l'émetteur aux divers abonnés, une information spécifique, qui permet ou interdit aux abonnés de numéroter. Chaque fois qu'un abonné choisit un canal, l'information d'interdiction est émise vers les autres abonnés. Pour donner l'impression de transparence à la télécommande, il suffit de placer une mémoire tampon dans chaque sélecteur de canaux. La commande sera réalisée automatiquement dès l'autorisation à numéroter. Les informations de télécommande étant, dans la pratique, très limitées, le retard induit pour éviter les collisions sera imperceptible à l'utilisateur.

## Revendications

1. Système de transmission optique comprenant :
A) au moins un ensemble émetteur (EE) comprenant un premier laser à semiconducteur (10) du type à réaction distribuée (DFB), ce laser possédant une première (Eᵢ) et une seconde (E₂) électrodes d'alimentation, une double source de courants (11, 12) apte à polariser le laser et à ajuster sa longueur d'onde d'émission et une source de courant (S) apte à délivrer un courant codé numériquement par des informations, cette source étant reliée à la première électrode et modulant en fréquence (FSK) le faisceau optique (19) émis par le laser,
B) une ligne de transmission optique (FO) apte à recevoir ce faisceau optique (19) et à le transmettre,
C) au moins un ensemble récepteur (ER) comprenant un second laser (20), identique au premier (10), c'est-à-dire à réaction distribuée (DFB) avec une première (E₁) et une seconde (E₂) électrodes, ce second laser (20) fonctionnant en récepteur et délivrant sur sa seconde électrode (E₂) une tension (V) dont les variations représentent l'information générée dans la source (S) de l'ensemble émetteur (EE) pour moduler en fréquence le premier laser (10) émis, et un terminal (38) restituant ladite information,
ce système étant caractérisé par le fait qu'il comprend en outre des moyens pour télécommander la source (S) de l'ensemble émetteur (EE) depuis l'ensemble récepteur (ER), ces moyens comprenant :
D) dans l'ensemble récepteur (ER) :
- un circuit de polarisation (11, 12) apte à accorder la longueur d'onde du laser filtre de réception sur celle de l'émetteur,
- un circuit de sélection de canal (40) relié à la première électrode (Eᵢ) du second laser (20) et apte à alimenter celui-ci en courant au-dessus d'un seuil pour le faire travailler en émetteur en modulation d'amplitude, ce circuit (40) délivrant un courant codé en amplitude (Ica) et le second laser (20) émettant ainsi un faisceau optique (29) modulé en amplitude, ce faisceau optique (29) étant transmis vers l'ensemble émetteur (EE) à travers la ligne de transmission optique (FO),
E) dans l'ensemble émetteur (EE) :
- un photorécepteur (48) sensible à la modulation d'amplitude et recevant le faisceau optique (29) modulé en amplitude provenant du second laser (20), ce photorécepteur (48) délivrant une tension (V_{ca}) restituant le code ayant servi à la modulation d'amplitude du second laser (20),
- un circuit de sélection (50) commandé par la tension de détection (V_{ca}) et commandant la source (S), laquelle comprend plusieurs canaux d'informations (Ci, C₂, ..), le circuit de sélection (50) sélectionnant l'un de ces canaux en fonction du code reçu.

2. Système selon la revendication 1, caractérisé par le fait que l'ensemble émetteur (EE) comprend en outre un coupleur optique (44) apte à recevoir le faisceau optique (29) modulé en amplitude délivré par la liaison optique (FO) et à diriger ce faisceau sur le photorécepteur (48).

3. Système selon la revendication 2, caratérisé par le fait que l'ensemble émetteur (EE) comprend en outre un isolateur optique (46) disposé entre le premier laser (10) et le coupleur optique (44).

4. Système selon la revendication 1, caractérisé par le fait que le circuit de sélection de canal (40) de l'ensemble récepteur (ER) est télécommandé (42).

5. Système selon l'une quelconque des revendications 1 à 4, caractérisé par le fait que le photorécepteur (48) en modulation d'amplitude est une diode PIN ou APD.

6. Système selon l'une quelconque des revendications 1 à 5, caractérisé par le fait qu'il comprend une pluralité d'ensembles émetteurs (EEᵢ, EE₂, EE₃) fonctionnant en parallèle chacun à une longueur d'onde particulière (λ₁, λ₂, λ₃), chaque ensemble étant affecté à un service particulier, les faisceaux lumineux (19₁, 19₂, 19₃) émis par les différents lasers à différentes longueurs d'onde étant dirigés à travers le coupleur (44) dans la même ligne de transmission optique (FO), l'ensemble récepteur (ER) comprenant en outre un circuit sélecteur de longueur d'onde (30) relié aux première (Eᵢ) et seconde (E₂) électrodes du second laser (20) pour ajuster la longueur d'onde de réception à l'une des longueurs d'onde d'émission (λ₁, λ₂, λ₃) et un circuit sélecteur de service (31) pour commander le sélecteur de longueur d'onde (30).

7. Système selon la revendication 6, caractérisé par le fait que les différents ensembles émetteurs (EEᵢ, EE₂, EE₃) sont affectés respectivement à divers services, par exemple télévision haute-définition, télévision normale, son numérique ou autre, chaque service comprenant plusieurs canaux.

8. Système selon l'une quelconque des revendications 1 à 7, caractérisé par le fait qu'il comprend plusieurs ensembles récepteurs fonctionnant en parallèle.

9. Système selon la revendication 8, caractérisé par le fait qu'il comprend des moyens pour transmettre en outre, de l'ensemble émetteur (EE) vers les ensembles récepteurs (ER) une information qui autorise ou interdit les ensembles récepteurs à télécommander un changement de canal.

10. Système selon la revendication 9, caractérisé par le fait que chaque circuit de sélection de canal (40) d'un ensemble récepteur (ER) comprend une mémoire pour recevoir et enregistrer un ordre de changement de canal, la lecture de cet ordre étant différée si un signal d'interdiction de télécommande a été reçu par l'ensemble récepteur.
